# FASCICULE DE BREVET EUROPEEN

(11) **EP 3 740 374 B1**
(45) Date de publication et mention de la délivrance du brevet: **29.09.2021**
(21) Numéro de dépôt: 19703157.8
(22) Date de dépôt: 08.01.2019
(51) Int. Cl.: B29C 64/35, B29C 64/153, B29C 64/165, B29C 64/364, B33Y 10/00, B33Y 40/00, A46B 1/00, A45D 40/26, B29C 71/00, B29C 64/357

(54) **PROCÉDÉ DE FABRICATION D'UN APPLICATEUR DE PRODUIT COSMÉTIQUE PAR FABRICATION ADDITIVE**
VERFAHREN ZUR HERSTELLUNG EINES APPLIKATORS FÜR KOSMETISCHE PRODUKTE DURCH GENERATIVE FERTIGUNG
METHOD FOR MANUFACTURING A COSMETIC PRODUCT APPLICATOR BY ADDITIVE MANUFACTURING

(30) Priorité: 15.01.2018 FR 1850296
(43) Date de publication de la demande: 25.11.2020
(73) Titulaire: Chanel Parfums Beauté, 92200 Neuilly-sur-Seine (FR)
(72) Inventeur: SALCIARINI, Christian, 83400 Hyères (FR); BERTUCCHI, Quentin, 92600 Asnières sur Seine (FR)
(74) Mandataire: Santarelli
(86) Numéro de dépôt international: PCT/FR2019/050031
(87) Numéro de publication internationale: WO 2019/138180

(56) Documents cités:
- WO-A1-2011/145960
- US-A1- 2006 251 826
- US-B2- 7 285 234

## Description

La présente invention concerne le domaine des procédés industriels permettant l'obtention d'applicateurs d'un produit cosmétique.

L'application d'un produit cosmétique liquide, fluide ou en poudre est généralement réalisée à l'aide d'un applicateur comportant des poils ou des dents permettant de retenir, comme les poils d'un pinceau, le produit cosmétique.

Bien que l'invention soit décrite dans le contexte de l'application d'un mascara, les produits cosmétiques englobent dans le présent document notamment tous les produits pour le maquillage de la peau, des lèvres ou des phanères. Les produits cosmétiques englobent également les produits de soin, notamment les formules de soin liquide, destinés à une application sur la peau, les lèvres et les phanères. L'invention présente un intérêt particulier dans le cadre de l'application des produits cosmétiques à proximité des yeux, notamment sur les cils ou les paupières. Par exemple, le produit cosmétique peut être un mascara, une ombre à paupières, ou un maquillage pour le contour des yeux désigné communément par le terme anglophone « eye-liner ».

Un article de mascara, ou « mascara », comprend classiquement un étui, un réservoir de mascara et un applicateur. Il existe plusieurs types d'applicateurs, ceux de type « goupillon », ceux injectés et ceux fabriqués par fabrication additive (parfois appelée « synthèse additive »). La fabrication additive désigne les procédés de fabrication par ajout ou agrégation de matière, également couramment désignés par l'expression « impression tridimensionnelle » ou « impression 3D ».

Un applicateur de type goupillon comporte une brosse qui comprend des poils formés par des fibres emprisonnées dans un fil métallique torsadé formant l'âme de l'applicateur.

Un applicateur injecté est généralement formé d'une seule pièce et comporte des poils ou des dents en matière plastique par exemple.

Un applicateur fabriqué par fabrication additive est lui aussi généralement d'une seule pièce et peut être formé par exemple à partir d'une poudre de polymères thermoplastiques.

Les procédés traditionnels d'obtention d'une pièce par fabrication additive permettent l'obtention de pièces ayant des caractéristiques dimensionnelles très précises. Néanmoins, les applicateurs produit cosmétiques obtenus peuvent présenter certains défauts ou inconvénients. Notamment, ces applicateurs peuvent présenter une rugosité mal contrôlée, insatisfaisante ou irrégulière, notamment au niveau des poils ou dents d'application. Par ailleurs, ces applicateurs peuvent présenter des particules détachées ou susceptibles de se détacher lors de l'application. Cela altère la qualité de l'application et peut se révéler problématique en particulier lors de l'application d'un produit cosmétique à proximité des yeux, par exemple sur les paupières. En particulier, des particules présentant une certaine taille peuvent être irritantes pour la cornée.

Enfin, les procédés actuels sont peu adaptés à des productions en grande série.

L'invention vise ainsi à proposer un procédé de fabrication d'un applicateur pour produit cosmétique résolvant au moins l'un des inconvénients précités.

L'invention porte ainsi sur un procédé de fabrication d'un applicateur de produit cosmétique comprenant une partie de préhension et une partie d'application comportant des poils ou des dents, la partie de préhension et la partie d'application étant formées d'un seul tenant. Le procédé comporte une étape de fabrication additive par frittage d'une poudre d'un matériau plastique suivie d'une étape de dépoudrage et d'un post-traitement pour l'élimination des particules détachées dudit applicateur de produit cosmétique ou partiellement frittées. Le post-traitement comporte des étapes de sablage (S4) et de soufflage ionisant (S5).

Le document WO2011/145960 décrit un procédé de fabrication additive par frittage d'une poudre de polyamide suivi d'une étape de dépoudrage et d'un post-traitement pour améliorer l'état de surface; le post-traitement pouvant comporter une étape de sablage.

Le procédé de fabrication d'un applicateur de produit cosmétique est donc envisagé selon l'invention comme un ensemble d'étapes dont la succession permet l'obtention des propriétés souhaitées de l'applicateur. En particulier, l'ensemble des étapes du procédé revendiqué est nécessaire pour l'obtention d'une rugosité souhaitée au niveau de la partie d'application (comportant des poils, ou des dents) de l'applicateur, tout en garantissant l'absence de particules potentiellement irritantes (par exemple pour l'œil de l'utilisateur) détachées ou pouvant se détacher lors de l'utilisation de l'applicateur.

Le post-traitement peut en outre comporter une étape finale de lavage (S6), de préférence dans un solvant non-aqueux.

Le matériau plastique employé dans le procédé de fabrication peut être un polyamide, de préférence un polyamide aliphatique, par exemple du polyamide 11.

Le procédé de fabrication peut comporter, avant l'étape de fabrication additive, une étape de conditionnement de la poudre de polyamide comportant :
- la fourniture de poudre neuve ne présentant que des grains dont la plus grande dimension est inférieure ou égale à 150 microns ;
- la fourniture de poudre dite usagée, ayant déjà servi à une étape de fabrication additive, et le calibrage de ladite poudre usagée pour qu'elle ne présente que des grains dont la plus grande dimension est inférieure ou égale à 150 microns ;
- le mélange de la poudre neuve et de la poudre usagée calibrée selon un rapport poudre neuve/poudre usagée compris entre 70/30 et 50/50, de préférence de l'ordre de 60/40.

La fabrication additive peut comporter une fusion sur lit de poudre par laser.

Le procédé de fabrication peut comporter une étape de pré-soufflage préalable à l'étape de sablage. Le sablage peut être réalisé par microbillage avec des billes de verre de diamètre compris entre 45 microns et 90 microns. Le sablage peut être réalisé dans un tambour rotatif comportant deux buses de sablage.

Le soufflage ionisant (S5) peut être réalisé dans un tambour rotatif comportant une barre d'ionisation interne et une barre d'ionisation externe.

Les étapes de sablage (S4) et de soufflage ionisant (S5) peuvent par exemple être réalisées par lots de 300 à 10 000 applicateurs de produit cosmétique.

L'invention porte aussi sur un procédé de production d'applicateurs de produit cosmétique comportant un procédé de fabrication tel que précédemment décrit et comportant en outre une étape de qualification (S7) comportant la détermination, dans un lot d'un nombre prédéterminé d'applicateurs de produit cosmétique, du nombre de particules détachées ou partiellement frittées résiduelles de plus grande dimension supérieure à 500 microns, et, si ledit nombre de particules est non nul, la modification d'au moins un paramètre d'une étape du post-traitement, puis la succession de tels procédés de fabrication et d'étapes de qualification (S7) jusqu'à ce que ledit nombre de particules de plus grande dimension supérieure à 500 microns soit nul.

D'autres particularités et avantages de l'invention apparaîtront encore dans la description ci-après.

Aux dessins annexés, donnés à titre d'exemples non limitatifs :
- la **figure 1** représente sous forme d'un diagramme de blocs un procédé conforme à un mode de réalisation de l'invention ;
- la **figure 2** représente sous forme d'un diagramme de blocs un procédé conforme à un mode de réalisation de l'invention comportant le procédé de la **figure 1** et des étapes supplémentaires optionnelles.

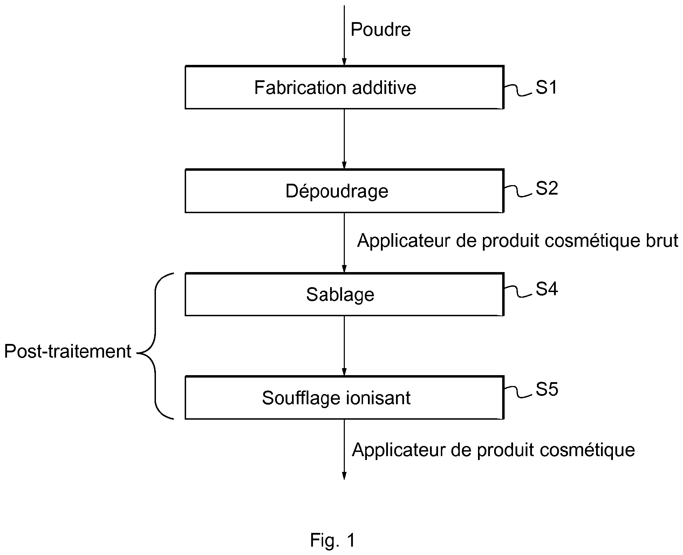

Le procédé de fabrication présenté à la **figure 1** présente les étapes d'un procédé de fabrication d'un applicateur de produit cosmétique conforme à l'invention. Ce procédé comporte une étape de fabrication additive S1, en vue de l'obtention d'une pièce brute.

### Fabrication additive (S1)

L'étape de fabrication additive S1 est réalisée à partir d'une poudre, en particulier une poudre d'un matériau plastique. Le procédé de fabrication additive employé est avantageusement un procédé de fusion sur lit de poudre, liage de poudre, également appelé « Frittage sélectif par laser ».

Un procédé de fusion sur lit de poudre consiste à produire des objets à partir de matériaux en poudre à l'aide d'un ou plusieurs lasers afin de faire fondre de façon sélective les particules de poudre à la surface du lit de poudre, couche après couche, dans une chambre fermée. Le type de poudre utilisée peut être tout type de poudre apte à être utilisé dans un tel procédé.

La poudre employée peut notamment être une poudre d'un polymère thermoplastique ou une poudre d'un polyamide, de préférence un polyamide aliphatique, par exemple du polyamide 11, également désigné PA11 ou de polyacrylamide.

Du polyamide 12 ou PA12 peut également être employé avec succès, bien que le PA11 lui soit préférable car il présente une plus grande souplesse.

Un exemple de poudre de PA11 particulièrement adaptée est la poudre commercialisée sous la référence « PA1101 » par la société EOS Materials.

De manière préférentielle, la poudre présente des grains dont la plus grande dimension est inférieure ou égale à 150 microns. De préférence, la plus grande dimension est inférieure ou égale à 80 microns, et encore plus préférentiellement inférieure ou égale à 60 microns.

La machine employée pour l'étape de fabrication additive peut être une machine commercialisée sous la dénomination FORMIGA P110 par la société EOS Materials, ou toute machine équivalente.

Lors de l'étape de fabrication, la machine de fabrication additive est en premier lieu chargée en poudre.

Par exemple, la fabrication peut être réalisée dans un bac contenant environ 10 kg de poudre (typiquement pour du PA11). La fabrication peut être réalisée sur plusieurs étages, par exemple entre deux et dix étages, notamment sur sept étages.

La formation de pièces brutes par frittage laser commence alors. Selon un mode de réalisation donné à titre d'exemple, la poudre dans le bac est maintenue à 150°C environ. Le ou les lasers viennent apporter l'énergie supplémentaire nécessaire à la fusion localisée de la poudre. Par exemple, un laser de 25 W peut être employé avec succès.

Plusieurs passes du laser peuvent être nécessaires.

La formation par fabrication additive d'un lot de trois mille à quatre mille pièces peut prendre environ quinze heures dans ces conditions. A l'issue de cette phase de formation des pièces brutes, l'ensemble doit être refroidi. Dans l'exemple pris précédemment le refroidissement peut durer de l'ordre de quinze heures. Le temps total de l'étape de fabrication additive peut donc être de l'ordre de 30 heures.

Afin d'éviter l'oxydation, le refroidissement est avantageusement réalisé sous gaz neutre, par exemple sous argon.

Afin de pouvoir optimiser les temps de cycle, et plus simplement le temps d'utilisation de la machine de fabrication additive pour la formation de pièces brutes, le refroidissement peut être réalisé hors de la machine, avec mise sous gaz neutre (notamment sous argon) du contenu du bac.

L'étape de fabrication additive S1 est réalisée dans une machine qui utilise un fichier numérique représentant géométriquement l'applicateur de produit cosmétique. Le fichier est obtenu après avoir conçu l'applicateur sur un logiciel de conception assisté par ordinateur (CAO). Ce fichier peut être au format STL ou tout autre format de fichier standard utilisable pour une synthèse additive par fusion sur lit de poudre. Le fichier est ensuite traité par un logiciel fourni par le constructeur de la machine utilisée pour la synthèse additive. Ce logiciel découpe en sections le fichier sous la forme d'images numériques (par exemple une centaine d'images) par exemple au format SU ou BFF, chacune d'elles correspondant à une couche du modèle à imprimer, c'est-à-dire à une section de l'applicateur prise dans un plan perpendiculaire à son axe longitudinal. Ces données sont ensuite transmises à la machine de fabrication additive afin qu'elle produise l'applicateur.

L'étape de fabrication additive aboutit ainsi à la formation de pièces brutes, à savoir des applicateurs de produit cosmétiques bruts, noyées dans de la poudre et gorgées de poudre.

Or, la demanderesse a constaté que non seulement il fallait séparer les applicateurs de produit cosmétique bruts ainsi obtenus de la poudre, mais qu'il était en outre important, notamment pour les applicateurs destinés à l'application d'un produit cosmétique à proximité des yeux, de garantir l'absence totale de grains détachés de l'applicateur (par exemple retenus dans ses poils) ou susceptibles de se détacher lors de l'utilisation, et dont la plus grande dimension est supérieure à une taille donnée, susceptible d'entrainer une irritation oculaire. Le post-traitement décrit ci-après vise à l'élimination totale de ces grains. Typiquement, le post-traitement vise à supprimer toutes les particules supérieures à 500 microns. En effet, des particules de dimensions supérieures aux dimensions des grains de poudre initiaux peuvent être générées lors de la fabrication additive, par exemple en cas de frittage incomplet de certains grains.

### Dépoudrage (S2)

L'étape de fabrication additive S1 est suivie d'une étape de dépoudrage S2. Cette étape permet de séparer les pièces brutes de la poudre.

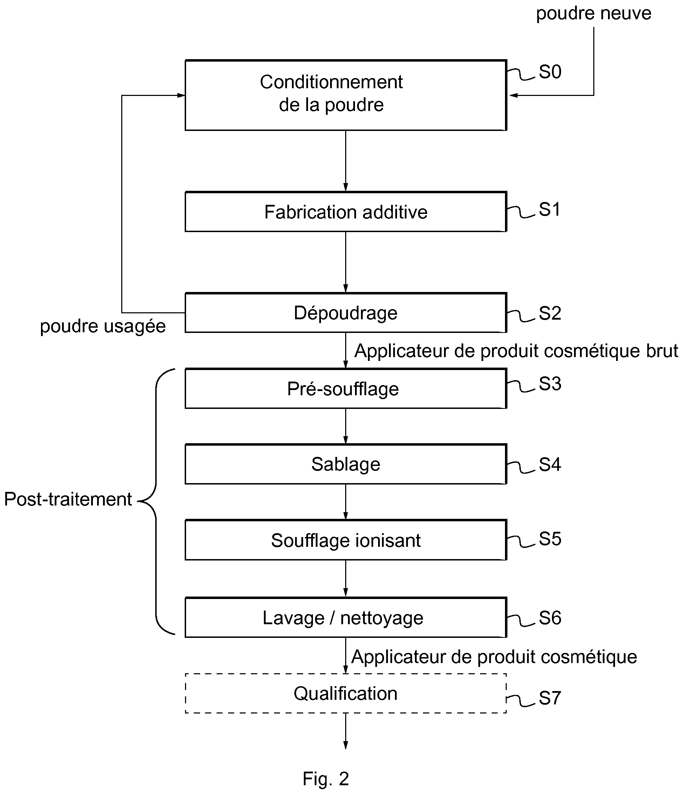

La poudre récupérée peut être remployée, comme décrit ci-après en référence à la **figure 2**. A cette fin, la poudre récupérée peut subir un procédé de tri afin de ne conserver que les grains dont la plus grande dimension est inférieure ou égale à une taille donnée (par exemple 150 microns, 80 microns ou 60 microns).

L'étape de dépoudrage consiste à séparer les pièces brutes de la poudre dans laquelle elles sont noyées, et à éliminer un maximum de poudre portée par la pièce brute (par exemple dans des recoins de la pièce brute, dans les poils d'une pièce brute de l'applicateur de produit cosmétique). Cette étape peut être réalisée manuellement. Par manuellement, on entend qu'un opérateur doit saisir les pièces brutes, individuellement ou par grappes, et en retirer la poudre par agitation, soufflage, et/ou brossage.

L'étape de dépoudrage peut être réalisée de manière automatique, ce qui est avantageux pour la production de pièces, notamment de petites pièces de formes complexes comme les applicateurs de produit cosmétique, à une échelle industrielle.

De manière préférentielle, cette opération est réalisée dans une cabine de dépoudrage afin de garantir la production à une échelle industrielle, c.à.d., plus de 200 000 pièces par semaine.

Le dépoudrage manuel et a fortiori le dépoudrage automatisé, peut néanmoins laisser de la poudre résiduelle, ce qui rend d'autant plus important le post-traitement des pièces brutes, à savoir des applicateurs de produit cosmétique bruts obtenues après le dépoudrage.

En effet, la demanderesse a constaté que pour la production d'applicateurs de produits cosmétiques, en particulier destinés à l'application d'un produit cosmétique à proximité des yeux, non seulement il fallait séparer les applicateurs de produits cosmétiques bruts ainsi obtenus de la poudre, mais qu'il était en outre important de garantir l'absence totale de grains détachés de l'applicateur (par exemple retenus dans ses poils) ou susceptibles de se détacher lors de l'utilisation, et dont la plus grande dimension est supérieure à une taille donnée susceptible d'entrainer une irritation oculaire. Le post-traitement qui suit vise à l'élimination totale de ces grains. Typiquement, le post-traitement vise à supprimer toutes les particules supérieures à 500 microns. En effet, des particules de dimensions supérieures aux dimensions des grains de poudre initiaux peuvent être générées lors de la fabrication additive, par exemple en cas de frittage incomplet de certains grains.

### Sablage (S4)

Le sablage est une technique connue de nettoyage d'une surface, qui utilise un abrasif projeté à grande vitesse à l'aide d'un gaz comprimé (généralement de l'air) par une buse sur la surface à nettoyer.

Néanmoins, le sablage d'applicateurs de produit cosmétique nécessite la mise en œuvre de paramètres optimisés, du fait de la petite taille des applicateurs, de la nécessité de sabler des éléments extrêmement fins (à savoir les poils des applicateurs) sans les détruire, de l'intérêt de sabler une grande quantité de pièces en même temps (par exemple de 300 à 10 000 pièces), et de l'importance de détacher des pièces brutes par le sablage toutes les particules susceptibles de se détacher lors de l'utilisation de l'applicateur.

Une étape de pré soufflage S3 peut précéder l'étape de sablage S4, et sera détaillée en référence à la **figure 2****.**

L'étape de sablage S4 permet d'éliminer en particulier les grains de poudre partiellement frittés. Le sablage est réalisé dans une sableuse comportant au moins une buse projetant des billes de verre ayant un diamètre de 45 à 90 microns. Le sablage permet également d'obtenir l'état de surface souhaité sur les applicateurs de produit cosmétique. D'autres médias abrasifs sont envisageables par exemple du bicarbonate, ou des noyaux de fruits compressés.

Outre la nature et la taille de particules abrasives, le type de machine de sablage, la pression d'injection, la distance et l'orientation de la buse vis-à-vis de la surface du tonneau, sont des paramètres importants pour obtenir les résultats souhaités.

Pour le traitement d'un lot important d'applicateurs (par exemple de l'ordre de 3000 à 4000 pièces) les paramètres suivants ont été déterminés avec succès. Le sablage est effectué dans une sableuse à tonneau rotatif. Le tonneau choisi a un diamètre de 500 mm. Le tonneau tourne à 3 tours par minutes pour assurer le brassage des pièces. Le sablage peut durer 35 à 45 minutes, par exemple 40 minutes. Les billes sont injectées sous une pression d'air de 2,5 bars.

L'Homme du métier comprendra bien évidemment que l'invention n'est pas limitée à ces paramètres précis, donnés à titre d'exemple.

Le brassage peut être amélioré par l'emploi d'une deuxième buse, soufflant latéralement dans le tonneau et/ou soulevant les pièces par rapport à la surface du tonneau.

### Soufflage ionisant (S5)

Le procédé comporte, après l'étape de sablage S4, une étape de soufflage ionisant S5. En effet, le sablage peut laisser des particules logées dans les poils ou autres interstices de l'applicateur de produit cosmétique. Les particules sont essentiellement des particules du matériau constitutif de l'applicateur de produit cosmétique, par exemple de PA11, mais peuvent également être des particules d'abrasif employées pour l'étape de sablage S4.

L'ionisation consiste de manière générale à enlever ou ajouter des charges à un atome ou une molécule. Ainsi, les systèmes d'ionisation appelés communément ioniseurs, produisent des ions qui sont des atomes chargés. Les ioniseurs se présentent sous différentes formes. La forme la plus fréquente est celle d'une barre. La barre d'ionisation doit être située à proximité du support à ioniser, typiquement à moins de 50 mm. La demanderesse a identifié que la mise en œuvre d'une étape de soufflage ionisant est particulièrement pertinente dans un procédé de fabrication additive d'un applicateur de produit cosmétique. En effet, dans le nettoyage par soufflage ionisant, l'ionisation permet d'éliminer les effets de l'électricité statique portée par l'applicateur de produit cosmétique. Le flux d'air du soufflage permet de séparer les particules résiduelles de l'applicateur, à la surface duquel elles ne sont plus retenues par l'électricité statique. Les particules ainsi séparées de l'applicateur sont aspirées hors de l'enceinte de soufflage ionisant.

Le soufflage ionisant peut être réalisé dans un tonneau ou tambour identique au tonneau de sablage, voire dans le même tonneau que celui utilisé pour l'étape de sablage S4. Le tonneau peut ainsi avoir les caractéristiques dimensionnelles et la vitesse de rotation mentionnée pour l'étape de sablage S4.

Pour l'étape de soufflage ionisant S5, le dispositif comporte avantageusement deux systèmes d'ionisation, par exemple deux barres d'ionisation. Une barre est positionnée à l'intérieur du tonneau (ou autre enceinte) et une barre disposée à l'extérieur.

Les paramètres de soufflage suivant peuvent être employés avec succès. Le soufflage ionisant peut être réalisé sous une pression de 4 bars. L'étape de soufflage ionisant S5 peut durer 30 à 40 minutes.

L'étape de soufflage ionisant S5 peut être réalisée par lots de 300 à 10 000 pièces par exemple, notamment de 3000 à 4000 applicateurs de produit cosmétique.

Bien évidemment, des paramètres proches peuvent être employés avec succès. Par exemple et de manière non limitative, la pression de soufflage peut être de 3 à 5 bars, la durée de soufflage peut être significativement réduite, et être par exemple de l'ordre de 15 minutes ou moins.

Suite au soufflage ionisant, des applicateurs de produit cosmétique ne présentant pas les inconvénients connus dans l'état de la technique (état de surface insatisfaisant, présence potentielle de particules irritantes pour l'œil) peuvent être obtenus.

La **figure 2** représente de manière analogue à la **figure 1** un procédé de fabrication d'un applicateur de produit cosmétique, ce procédé étant conforme à un mode de réalisation de l'invention comportant le procédé de la **figure 1** et des étapes supplémentaires. Les étapes supplémentaires présentées ci-dessous concernent d'une part une étape préalable de préparation ou conditionnement de la poudre avant l'étape de fabrication additive (étape de conditionnement de la poudre SO), et d'autre part des étapes de post-traitement permettant de garantir de manière encore plus certaine que l'applicateur obtenu en sortie de procédé présente les caractéristiques souhaitées, et notamment l'absence de particules détachées ou susceptibles de se détacher lors de l'utilisation.

Les étapes optionnelles ci-dessous décrites peuvent faire varier les paramètres optimaux de réalisation des autres étapes, mais elles peuvent être incorporées indépendamment les unes des autres au procédé de la **figure 1****.**

### Conditionnement de la poudre (S0)

Afin d'obtenir l'état de surface final souhaité, il est important que la poudre employée pour l'étape de fabrication additive S1, par exemple de PA 11 ou PA 12, présente à l'origine des caractéristiques adéquates.

La caractéristique qui apparait la plus importante est la granulométrie de la poudre employée.

Typiquement, la demanderesse a constaté l'importance d'employer une poudre fine et homogène pour éviter les défauts sur l'applicateur de produit cosmétique en tant que produit final du procédé. La poudre employée doit avantageusement ne présenter que des grains dont la plus grande dimension est inférieure à 150 microns. Avantageusement, une poudre encore plus fine peut être employée, à savoir dont la plus grande dimension des grains est inférieure à 80 microns ou à 60 microns.

Les caractéristiques souhaitées, notamment la granulométrie, peut être garantie par la sélection d'une poudre commercialement disponible présentant ces caractéristiques. Néanmoins, pour des raisons évidentes de coûts, il est avantageux de pouvoir remployer de la poudre dite usagée, c'est-à-dire ayant déjà été employée lors d'une étape de fabrication additive S1. Notamment, une partie de la poudre récupérée lors de l'étape de dépoudrage S2 peut être remployée pour un cycle (ou un lot) suivant de fabrication d'applicateurs de produit cosmétique.

La poudre usagée peut avoir été altérée, comparativement à la poudre neuve, lors de la fabrication additive, même si cette poudre n'est pas liée à la pièce brute. Les grains de poudre ont pu être déformés par la chaleur, collés, ou partiellement frittés.

Afin de garantir que la poudre usagée puisse être remployée sans compromettre les caractéristiques du produit final, la poudre usagée récupérée est calibrée par un procédé adapté de tri ou calibration. Notamment un tamisage de la poudre usagée peut être réalisé. Plusieurs types de tamisage peuvent être envisagés afin de séparer de la poudre récupérée les grains ayant une plus grande dimension supérieure à la dimension maximale souhaitée. Il est notamment possible d'utiliser un tamisage par ultrasons, par micro-vibration et/ou par soufflage.

La dimension maximale souhaitée de la plus grande dimension des grains peut être par exemple de 150 microns, ou 80 microns, ou 60 microns.

Le tri ou tamisage permet la récupération d'une poudre usagée calibrée, qui est adaptée au remploi pour la fabrication additive d'applicateurs de produit cosmétique.

Dans l'étape de conditionnement de la poudre S0, un mélange de poudre neuve et de poudre usagée calibrée est ainsi réalisé. On tend à remployer au maximum la poudre usagée. Des résultats satisfaisants ont été obtenus, avec une poudre de PA 11, avec un rapport poudre neuve/poudre usagée calibrée compris entre 100/0 et 50/50, notamment compris entre 70/30 et 50/50, par exemple de l'ordre de 60/40.

### Pré-soufflage (S3)

L'étape de pré-soufflage S3 est réalisée après l'étape de dépoudrage S2 et avant l'étape de sablage S4.

L'étape de pré-soufflage vise à retirer suite au dépoudrage un maximum de particules en soumettant à un flux d'air sous pression les pièces brutes dépoudrées. L'étape de pré-soufflage peut avantageusement être réalisée dans le tonneau de la machine de sablage qui sera utilisée pour l'étape de sablage S4. Le pré-soufflage peut être réalisé pendant 5 à 10 minutes, par exemple 7 minutes, avec deux buses soufflant de l'air à 2,5 bars.

### Lavage / nettoyage (S6)

Un nettoyage complémentaire peut être réalisé dans une étape dite de lavage ou de nettoyage S6.

On entend par nettoyage tout type d'action permettant une élimination des grains, particules, et autres éléments résiduels à la surface des applicateurs de produit cosmétique, ou dans les poils ou interstices de ces derniers. Le lavage correspond à un type de nettoyage mettant en œuvre un produit de lavage, aqueux ou non.

Un lavage dans une solution appropriée, peut être réalisé. Le lavage peut être réalisé sur un principe de lavage par reflux.

Le dispositif de lavage employé peut comporter plusieurs sections, par exemple :
- un bac de lavage dit bouilleur ;
- un bac de rinçage ;
- une zone d'évaporation ;
- une zone de séchage ; et
- un serpentin à 4°C de condensation permettant de récupérer et de recycler le produit de lavage.

Le bac de lavage peut comporter un panier maillé tournant, et/ou des jets immergés.

Dans les bacs de lavage et/ou de rinçage, les pièces peuvent être soumises à des ultrasons. Les ultrasons utilisés peuvent avoir une fréquence comprise entre 25 kHz et 45 kHz.

Le lavage peut être notamment réalisé dans une solution à 50% d'alcool isopropylique ou de préférence dans une solution chimique de fluorocétone. Cette solution présente une bonne efficacité dans l'élimination des billes de sablages résiduelles, et plus généralement dans l'élimination des particules de dimensions inférieures à 80 microns, sans altérer les propriétés mécaniques des applicateurs de produit cosmétique.

On peut également envisager, de façon additionnelle ou alternative, un tamisage des applicateurs de produit cosmétique sous micro-vibration et/ou soufflage. Cela présente également l'avantage d'être réalisé en milieu sec.

### Qualification (S7)

Une étape de qualification S7 peut permettre de s'assurer que les applicateurs de produit cosmétique obtenus en fin de procédé de fabrication à proprement parler répondent à certains critères qualitatifs.

En particulier, l'étape de qualification peut permettre de s'assurer de l'absence de particules potentiellement irritantes dans les produits finis.

L'étape de qualification peut être réalisée périodiquement au cours de la production, à intervalles réguliers ou aléatoires, ou plus préférentiellement par prélèvement aléatoire d'un nombre déterminé d'applicateurs de produit cosmétique dans chaque lot de pièces. Un lot peut par exemple être constitué d'un ensemble de 10 000 à 100 000 pièces, et dans chaque lot peuvent être prélevées de 8 à 100 pièces.

Lors de l'étape de qualification, on peut s'assurer qu'aucune des pièces prélevées ne comporte de particules, détachées ou susceptibles de se détacher lors de l'utilisation, dont la plus grande dimension est supérieure à 500 microns (ou supérieure à une autre dimension prédéfinie).

Il peut également être vérifié le nombre de particules, détachées ou susceptibles de se détacher lors de l'utilisation, de dimension inférieure. Par exemple, il est possible de vérifier le nombre de particules dont la plus grande dimension est comprise entre 150 microns et 500 microns. Par exemple, l'étape de qualification peut permettre qu'un nombre maximum prédéfini de telles particules (non critique pour le consommateur) pour une quantité d'applicateurs donnée est présent (par exemple 7 particules pour un prélèvement de 32 applicateurs dans un lot de 10 000 à 100 000 pièces ou encore 10 particules pour un prélèvement de 50 pièces d'un ensemble de plus de 500 000 pièces).

En cas de non-conformité détectée lors de l'étape de qualification, le lot concerné peut être rejeté et détruit. Des mesures de vérification du procédé et/ou de correction des paramètres de fabrication peuvent être prises.

L'invention propose ainsi un procédé de fabrication à l'échelle industrielle, par fabrication additive, d'un applicateur de produit cosmétique comprenant une partie de préhension et une partie d'application. Ce procédé de fabrication garantit l'absence de particules détachées ou susceptibles de se détacher notamment de la partie d'application, qui peut comporter des poils ou des dents pour la rétention de produit cosmétique. Cela est important pour les applicateurs du type brosse à mascara, ou plus généralement pour les applicateurs destinés à l'application d'un produit cosmétique à proximité des yeux. Le procédé garantit ainsi l'absence de particules de dimensions supérieure à une dimension données (par exemple 500 microns). Le procédé peut également permettre de garantir un nombre maximum de particules dans certaines plages de dimensions (par exemple entre 150 microns et 500 microns).

Le procédé de fabrication proposé dans l'invention permet cela en considérant la fabrication comme une succession d'étapes ne se limitant pas à la synthèse additive, mais comportant un prétraitement ou conditionnement du matériau employé, ainsi que des étapes de post-traitement adaptées.

## Revendications

1. Procédé de fabrication d'un applicateur de produit cosmétique comprenant une partie de préhension et une partie d'application comportant des poils ou des dents, la partie de préhension et la partie d'application étant formées d'un seul tenant,
le procédé comportant une étape de fabrication additive (S1) par frittage d'une poudre d'un matériau plastique suivie d'une étape de dépoudrage (S2) et d'un post-traitement pour l'élimination des particules détachées dudit applicateur de produit cosmétique ou partiellement frittées, le post-traitement comportant une étape de sablage (S4) ;
**caractérisé en ce que** le post-traitement comporte en outre une étape de soufflage ionisant (S5).

2. Procédé de fabrication selon la revendication 1, dans lequel le post-traitement comporte en outre une étape finale de lavage (S6), de préférence dans un solvant non-aqueux.

3. Procédé de fabrication selon la revendication 1 ou la revendication 2, dans lequel le matériau plastique est un polyamide, de préférence un polyamide aliphatique, par exemple du polyamide 11.

4. Procédé de fabrication selon la revendication 3, comportant avant l'étape de fabrication additive (S1), une étape de conditionnement de la poudre (S0) de polyamide comportant :
- la fourniture de poudre neuve ne présentant que des grains dont la plus grande dimension est inférieure ou égale à 150 microns ;
- la fourniture de poudre dite usagée, ayant déjà servi à une étape de fabrication additive, et le calibrage de ladite poudre usagée pour qu'elle ne présente que des grains dont la plus grande dimension est inférieure ou égale à 150 microns ;
- le mélange de la poudre neuve et de la poudre usagée calibrée selon un rapport poudre neuve/poudre usagée compris entre 70/30 et 50/50, de préférence de l'ordre de 60/40.

5. Procédé de fabrication selon l'une des revendications précédentes, dans lequel la fabrication additive (S1) comporte une fusion sur lit de poudre par laser.

6. Procédé de fabrication selon l'une des revendications précédentes, comportant une étape de pré-soufflage (S3) préalable à l'étape de sablage.

7. Procédé de fabrication selon l'une des revendications précédentes, dans lequel le sablage (S4) est réalisé par microbillage avec des billes de verre de diamètre compris entre 45 microns et 90 microns.

8. Procédé de fabrication selon l'une des revendications précédentes, dans lequel le sablage (S4) est réalisé dans un tambour rotatif comportant deux buses de sablage.

9. Procédé de fabrication selon l'une des revendications précédentes, dans lequel le soufflage ionisant (S5) est réalisé dans un tambour rotatif comportant une barre d'ionisation interne et une barre d'ionisation externe.

10. Procédé de fabrication selon l'une des revendications précédentes, dans lequel les étapes de sablage (S4) et de soufflage ionisant (S5) sont réalisées par lots de 300 à 10 000 applicateurs de produit cosmétique.

11. Procédé de production d'applicateurs de produit cosmétique comportant un procédé de fabrication selon l'une des revendications précédentes, **caractérisé en ce qu'**il comporte en outre une étape de qualification (S7) comportant la détermination, dans un lot d'un nombre prédéterminé d'applicateurs de produit cosmétique, du nombre de particules détachées ou partiellement frittées résiduelles de plus grande dimension supérieure à 500 microns, et, si ledit nombre de particules est non nul, la modification d'au moins un paramètre d'une étape du post-traitement, puis la succession de tels procédés de fabrication et d'étapes de qualification (S7) jusqu'à ce que ledit nombre de particules de plus grande dimension supérieure à 500 microns soit nul.

## Patentansprüche

1. Verfahren zum Fertigen eines Applikators für Kosmetikprodukte, der ein Griffteil und ein Applikationssteil mit Borsten oder Zähnen aufweist, wobei das Griffteil und das Applikationsteil aus einem Stück gebildet sind, **dadurch gekennzeichnet, dass**
das Verfahren einen Schritt der additiven Fertigung (S1) durch Sintern eines Pulvers aus einem Kunststoffmaterial, gefolgt von einem Schritt des Entstaubens (S2) und einer Nachbearbeitung zum Entfernen von vom Applikator für Kosmetikprodukte abgelösten oder teilgesinterten Partikeln, umfasst, wobei die Nachbearbeitung einen Schritt des Sandstrahlens (S4) umfasst;
**dadurch gekennzeichnet, dass**
die Nachbearbeitung ferner einen Schritt des ionisierenden Abblasens (S5) umfasst.

2. Fertigungsverfahren nach Anspruch 1,
wobei die Nachbehandlung ferner einen abschließenden Schritt des Abwaschens (S6), vorzugsweise in einem nichtwässrigen Lösungsmittel, umfasst.

3. Fertigungsverfahren nach Anspruch 1 oder Anspruch 2,
wobei das Kunststoffmaterial ein Polyamid, vorzugsweise ein aliphatisches Polyamid, beispielsweise Polyamid 11, ist.

4. Fertigungsverfahren nach Anspruch 3,
umfassend vor dem Schritt der additiven Fertigung (S1) einen Schritt der Konditionierung des Polyamidpulvers (S0), umfassend:
- Bereitstellen von Neupulver, das nur Körner enthält, deren größte Abmessung kleiner oder gleich 150 Mikrometer ist;
- Bereitstellen von sogenanntem Altpulver, das bereits in einem Schritt der additiven Fertigung verwendet wurde, und Kalibrieren des Altpulvers derart, dass es nur Körner aufweist, deren größte Abmessung kleiner oder gleich 150 Mikrometer ist;
- Mischen von Neupulver und kalibriertem Altpulver gemäß einem Verhältnis Neupulver/Altpulver zwischen 70/30 und 50/50, vorzugsweise in der Größenordnung von 60/40.

5. Fertigungsverfahren nach einem der vorhergehenden Ansprüche, wobei die additive Fertigung (S1) ein Laser-Pulverbettschmelzen umfasst.

6. Fertigungsverfahren nach einem der vorhergehenden Ansprüche, umfassend einen Schritt des Vor-Abblasens (S3) vor dem Schritt des Sandstrahlens.

7. Fertigungsverfahren nach einem der vorhergehenden Ansprüche, wobei das Sandstrahlen (S4) durch Mikrokugelstrahlen mit Glaskügelchen mit einem Durchmesser zwischen 45 Mikron und 90 Mikron erfolgt.

8. Fertigungsverfahren nach einem der vorhergehenden Ansprüche, wobei das Sandstrahlen (S4) in einer rotierenden Trommel mit zwei Sandstrahldüsen erfolgt.

9. Fertigungsverfahren nach einem der vorhergehenden Ansprüche, wobei das ionisierende Abblasen (S5) in einer rotierenden Trommel mit einem inneren lonisationsstab und einem äußeren lonisationsstab erfolgt.

10. Fertigungsverfahren nach einem der vorhergehenden Ansprüche,
wobei die Schritte des Sandstrahlens (S4) und des ionisierenden Abblasens (S5) in Chargen von 300 bis 10 000 Applikatoren für Kosmetikprodukte erfolgen.

11. Verfahren zum Herstellen von Applikatoren für Kosmetikprodukte, das ein Fertigungsverfahren nach einem der vorhergehenden Ansprüche umfasst, **dadurch gekennzeichnet, dass** es ferner einen Schritt der Qualifizierung (S7) umfasst, der das Bestimmen der Anzahl von abgelösten oder teilgesinterten Restpartikeln mit einer größten Abmessung von über 500 Mikrometern in einer Charge mit vorbestimmter Anzahl von Applikatoren für Kosmetikprodukte umfasst, sowie bei einer Anzahl von Partikeln ungleich Null die Änderung mindestens eines Parameters eines Schrittes der Nachbearbeitung und dann die Aufeinanderfolge solcher Fertigungsverfahren und Qualifizierungsschritte (S7) solange, bis die Anzahl der Partikel mit einer größten Abmessung von über 500 Mikrometern Null ist.

## Claims

1. Method of manufacturing a cosmetic product applicator comprising a grip part and an application part comprising bristles or teeth, the grip part and the application part being formed as one piece,
the method comprising a step of additive manufacturing (S1) by sintering of a powder of plastic material followed by a step of depowdering (S2) and a post-treatment for the elimination of the particles that are detached from said cosmetic product applicator or are partially sintered, the post-treatment comprising a step of sand-blasting (S4);
**characterized in that** the post-treatment further comprises a step of ionizing blowing (S5).

2. Manufacturing method according to claim 1, wherein the post-treatment further comprising a final step of washing (S6), preferably in a nonaqueous solvent.

3. Manufacturing method according to claim 1 or claim 2, wherein the plastic material is a polyamide, preferably an aliphatic polyamide, for example polyamide 11.

4. Manufacturing method according to claim 3, comprising, prior to the additive manufacturing step (S1), a step of processing of the polyamide powder (S0) comprising:
- providing new powder having only grains of which the greatest dimension is less than or equal to 150 microns;
- providing so-called used powder, having already served for an additive manufacturing step, and the calibration of said used powder in order for it to have only grains of which the greatest dimension is less than or equal to 150 microns;
- mixing the new powder and the calibrated used powder in a new powder/used powder ratio comprised between 70/30 and 50/50, preferably of the order of 60/40.

5. Manufacturing method according to one of the preceding claims, wherein the additive manufacturing (S1) comprises powder bed fusion by laser.

6. Manufacturing method according to one of the preceding claims, comprising a pre-blowing step (S3) prior to the sand-blasting step.

7. Manufacturing method according to one of the preceding claims, wherein the sand-blasting is carried out by microsphere treatment with glass spheres of diameter comprised between 45 microns and 90 microns.

8. Manufacturing method according to one of the preceding claims, wherein the sand-blasting (S4) is carried out in a rotary drum comprising two sand-blasting nozzles.

9. Manufacturing method according to one of the preceding claims, wherein the ionizing blowing (S5) is carried out in a rotary drum comprising an internal ionizing bar and an external ionizing bar.

10. Manufacturing method according to one of the preceding claims, wherein the steps of sand-blasting (S4) and ionizing blowing (S5) are carried out in batches of 300 to 10 000 cosmetic product applicators.

11. Method of producing cosmetic product applicators comprising a manufacturing method according to one of the preceding claims, **characterized in that** it further comprises a qualifying step (S7) comprising determining, in a batch of a predetermined number of cosmetic product applicators, the number of residual particles that are detached or partially sintered of largest dimension greater than 500 microns, and, if said number particles is not zero, modifying at least one parameter of a post-treatment step, then the succession of such manufacturing methods and qualifying steps (S7) until said number of particles of largest dimension greater than 500 microns is zero.
